# NEUE EUROPÄISCHE PATENTSCHRIFT

(11) **EP 2 083 926 B2**
(45) Veröffentlichungstag und Bekanntmachung des Hinweises auf die Entscheidung über den Einspruch: **08.11.2017**
(45) Hinweis auf die Patenterteilung: 16.01.2013
(21) Anmeldenummer: 07815148.7
(22) Anmeldetag: 15.10.2007
(51) Int. Cl.: A63B 29/02, A62B 35/00, E04G 21/32, F16B 45/02

(54) **SELBSTSICHERUNGSSET SOWIE ANLAGE MIT SICHERUNGSSTELLEN**
SELF-BELAY SET AS WELL AS SYSTEM WITH BELAY POINTS
KIT AUTOBLOQUANT ET SYSTEME AVEC EMPLACEMENTS DE SECURITE

(30) Priorität: 23.10.2006 AT 17712006
(43) Veröffentlichungstag der Anmeldung: 05.08.2009
(60) Teilanmeldung: 11181303.6
(73) Patentinhaber: Strasser, Philipp, 2371 Hinterbrühl (AT)
(72) Erfinder: Strasser, Philipp, 2371 Hinterbrühl (AT)
(74) Vertreter: Dilg, Haeusler, Schindelmann Patentanwaltsgesellschaft mbH
(86) Internationale Anmeldenummer: PCT/AT2007/000481
(87) Internationale Veröffentlichungsnummer: WO 2008/049143

(56) Entgegenhaltungen:
- EP-A- 1 832 315
- DE-B3-102005 009 946
- US-A- 4 423 796
- US-A1- 2002 175 024
- US-B1- 6 330 931

## Beschreibung

Die Erfindung betrifft eine Anlage gemäß dem Oberbegriff von Patentanspruch 1 mit zwei oder mehreren Sicherungsstellen, wobei die Anlage ein Selbstsicherungsset aufweist.

Ein Selbstsicherungsset dieser Art wird auch als Klettersteigset bezeichnet. Klettersteigsets dienen der Sicherheit von Kletterern auf sogenannten "gesicherten" Klettersteigen oder Hochseilgärten. Sie werden jedoch auch für ausgesetzte Arbeiten an Hausfassaden, Dächern, Brücken, Masten, etc. sowie auch in der Schifffahrt, insbesondere bei Segelbooten, eingesetzt. Ein Selbstsicherungsset bzw. Klettersteigset weist in der Regel zwei Karabiner auf, die jeweils über ein als Seil oder Band ausgebildetes Verbindungsstück mit der sich sichernden Person verbunden sind, z.B. an einem Sicherungsgurt, wie z.B. einem Hüftgurt, der sich sichernden Person befestigt sind. Die beiden Karabiner sind oftmals an den freien Enden eines Y- oder V-förmigen Seils oder Bandes befestigt, welches Seil bzw. Band mittig mit einer Anhängevorrichtung zum Befestigen an einem Sicherungsgurt der sich sichernden Person versehen ist.

Der Kletterer sollte beim Klettern immer mit zumindest einem Karabiner an einer vorinstallierten Sicherung (z.B.) Stahlseil, Leiter, Bügel etc.) am Klettersteig bzw. Hochseilgarten eingehängt sein. Der zweite Karabiner ist entweder ebenfalls eingehängt, oder er wird geöffnet, um ihn bei Umlenkungen bzw. Unterbrechungen der vorinstallierten Sicherung umzuhängen, d.h. in die Fortsetzung der vorinstallieren Sicherung einzuhängen, worauf der erste Karabiner ebenfalls auf die Fortsetzung der vorinstallieren Sicherung umgehängt werden kann.

Hierbei ergibt sich folgende Problematik:

Bei der Benutzung von Klettersteigsets kommt es immer wieder zu Unfällen, die auf menschliches Versagen des Benutzers zurückzuführen sind. Besonders bei Kindern und ungeübten Benutzern kommt es, nicht zuletzt durch die Nervosität, die die Höhe auf Hochseilgärten oder Klettersteigen mit sich bringt, immer wieder zu unsachgemäßer Handhabung, wie einem gleichzeitigen Aushängen beider Karabiner. Dies bedeutet eine ungesicherte Situation, die im schlimmsten Fall zu einem Absturz des Benutzers aus großer Höhe führen kann.

Gemäß dem Stand der Technik sind lediglich einzelne, gegen versehentliches Öffnen versperrbare Karabiner bekannt, u.A. aus der WO 2004/113745 A1, aus der eine Ausführungsform bekannt ist, bei der ein Karabiner eine Blockiereinrichtung aufweist, die zur Fernentriegelung durch eine Schnur in Freigabestellung bewegt werden kann. Gemäß der US 2 116 880 A kann eine Sperre des Karabiners durch einen Schlüsselstab gelöst werden. Die FR 2 483 791 A1 beschreibt einen Karabinerhaken, der zusätzlich durch Federkraft geöffnet wird. Weiters gibt die DE 79 19 515 U1 einen Sicherungshaken mit Fernöffnung bekannt, die über einen Bowdenzug aktiviert werden kann. Die US 4 528 728 A beschreibt unterschiedliche Blockiervorrichtungen für einzelne Karabinerhaken.

Aus der US 4 423 796 A ist weiter eine Sicherheitseinrichtung für das Erklettern von Leitern bekannt, die zwei über einen Bowdenzug verbundene Karabiner aufweist. Der Bowdenzug gewährleistet, dass stets nur einer der beiden Karabiner geöffnet werden kann. Das Verschließen jedes Karabiners erfolgt in dem dieser auf einer Leitersprosse eingehängt und nach unten gezogen wird. Durch diese bekannte Vorrichtung kann vermieden werden, dass der Benutzer in unbeabsichtigter Weise einen Karabiner verschließt, wenn dieser nicht eingehängt ist, und im Anschluss daran den zweiten Karabiner öffnet, um so in eine gänzlich ungesicherte Situation zu gelangen. Gegenüber dem oben diskutierten Stand der Technik stellt dies eine wesentliche Verbesserung dar. Nicht gelöst bei dieser Vorrichtung ist jedoch das Problem, dass der Benutzer einen Karabiner grundsätzlich auch an einer nicht sicheren Stelle, wie etwa einer Stromleitung oder dergleichen einhängen kann und auf diese Weise den anderen Karabiner öffnet.

Aufgabe dieser Erfindung ist es, die genannte Vorrichtung so weiter zu bilden, dass eine fehlerhafte Benutzung jedenfalls sicher ausgeschlossen werden kann.

Erfindungsgemäß wird dies durch die Merkmale des Patentanspruchs 1 erreicht.

Als Sicherungsmittel kann ein an der Sicherungsstelle befestigter Schlüssel dienen; es ist jedoch auch möglich, elektrisch, elektronisch, magnetisch oder induktiv wirkende Sicherungsmittel vorzusehen. Weiters ist es auch denkbar, optisch wirkende Sicherungsmittel einzusetzen.

Gemäß einer bevorzugten Ausführungsform der Erfindung sind die beiden Karabiner mechanisch gekuppelt.

Eine besonders leichte Ausführungsform ist dadurch gekennzeichnet, dass die beiden Karabiner elektrisch gekuppelt sind, oder durch, dass die beiden Karabiner über Funk gekuppelt sind.

Eine weitere Ausführungsform, die ohne mechanische Kuppelung auskommt, ist dadurch gekennzeichnet, dass die beiden Karabiner hydraulisch gekuppelt sind.

Eine Anlage gemäß Anspruch 1 mit zwei oder mehreren Sicherungsstellen ist dadurch gekennzeichnet, dass die Sicherungsstellen, mit Sicherungsmitteln des Selbstsicherungssets zusammenwirken, wobei vorzugsweise die Sicherungsstellen von an Fixpunkten befestigten Seilen, Bügeln, Leitern oder Handläufen ausgebildet sind. Um eine Sicherung auch über größere Distanzen sicherzustellen, sind zweckmäßig benachbarte Sicherungsstellen in Reichweite voneinander angeordnet.

Die Erfindung ist nachfolgend an einigen Ausführungsbeispielen näher erläutert, worin die Fig. 1a bis 1j das der Erfindung zugrunde liegende Prinzip näher erläutern. Fig. 2 zeigt ein Selbstsicherungsset in schematischer Darstellung gemäß einer ersten Ausführungsform. Fig. 3 gibt die Darstellung eines Karabiners wieder und Fig. 4 veranschaulicht dessen Einzelteile. Die Funktion dieses Karabiners ist anhand den Fig. 5a bis 5d näher erläutert. Fig. 6a veranschaulicht einen Schlüssel in Seitenansicht und Fig. 6b in Stirnansicht. Anhand der Fig. 7a bis 7d ist die Funktion einer geänderten Ausführungsform eines Karabiners veranschaulicht. Die Fig. 8a bis 8f veranschaulichen das Zusammenwirken zweier Karabiner durch ein elektrisches Signal.

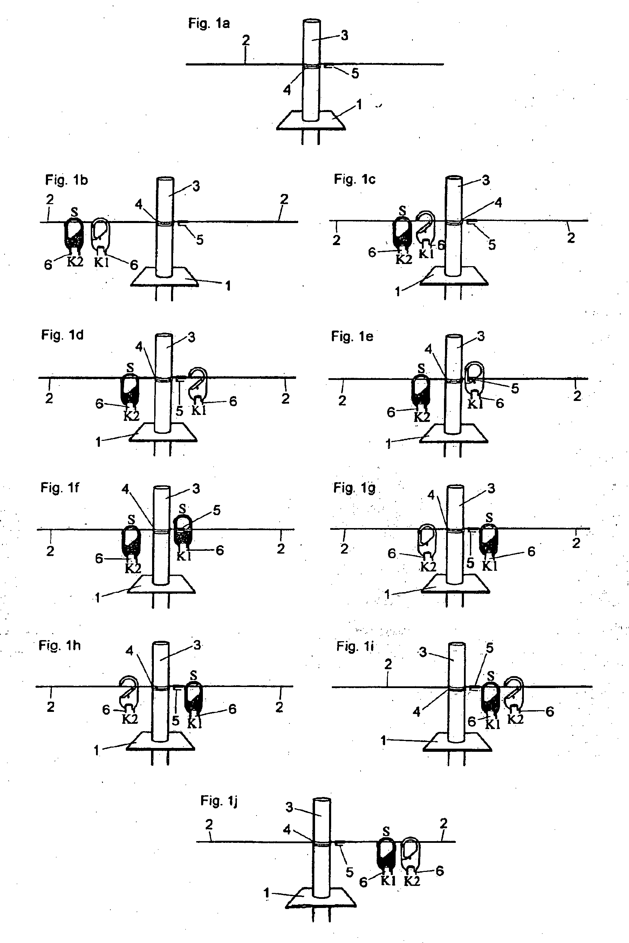

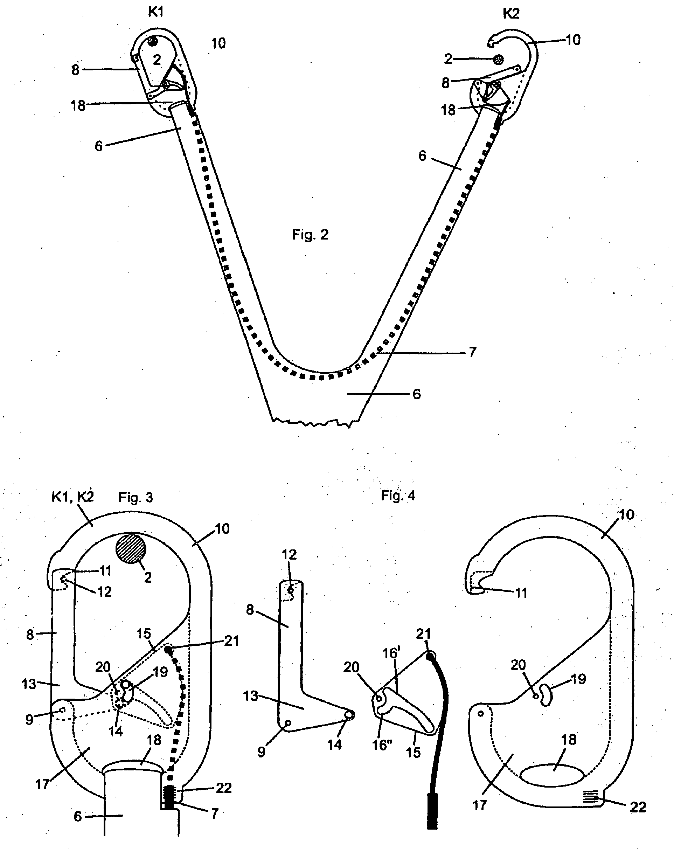

Zur Erläuterung der Handhabung eines erfindungsgemäßen Selbstsicherungssets dient die nachfolgende Beschreibung, die sich auf die Fig. 1a bis 1j bezieht. In diesen Figuren ist eine Plattform 1 eines Hochseilgartens gezeigt, wobei ein Seil, wie ein Stahlseil 2, von Mast 3 zu Mast 3 gespannt ist. Das Stahlseil 2 ist an jedem Mast 3 befestigt, beispielsweise mit einer Umwicklung 4, und dient als Sicherungsstelle zum Absichern gegen einen Absturz einer Person. Knapp neben dem Mast 3 befindet sich ein Schlüssel 5 für das Sichern bzw. Entsichern zweier Karabiner K1 und K2 eines Selbstsicherungssets, wobei jeder der Karabiner K1 und K2 über ein Verbindungsstück 6 mit einer sich sichernden Person verbunden ist Dieses Verbindungsstück 6 kann, wie in Fig. 2 veranschaulicht, z.B. von einem Y-förmigen Sicherungsband 6 gebildet sein. Beide Karabiner K1 und K2 sind mittels eines Kupplungsmittels 7 gekoppelt, wobei das Kupplungsmittel 7 stets nur einen der beiden Karabiner K1 oder K2 zum Öffnen freigibt und den zweiten in Schließstellung hält. Diese Kupplungsmittel 7 können von verschiedener Bauart sein, wie dies später noch beschrieben ist.

In Fig. 1 ist der jeweils gegen Öffnen gesperrte Karabiner K1 bzw. K2 mit S bezeichnet und mit schwarzer Farbe angelegt. Gemäß Fig. 1b gelangt die sich sichernde Person entlang des Stahlseiles 2 bis zu einer den Mast 3 umgebenden Plattform 1, wobei der Karabiner K2 blockiert ist gegen Öffnen und der Karabiner K1 nicht blockiert ist, jedoch noch geschlossen ist. Beide Karabiner K1 und K2 sind am Stahlseil 2 eingehängt.

Fig. 1c zeigt das Öffnen des Karabiners K1, der anschließend, wie dies in Fig. 1d gezeigt ist, in das Stahlseil 2, das vom Mast 3 zu einem weiteren Mast weiterführt, eingehängt wird. Hierbei wird, wie Fig. 1e zeigt, der Karabiner K1 mittels des Schlüssels 5 versperrt, wodurch der Karabiner K1 gegen Öffnen gesichert ist. Kurzzeitig sind während des Versperrens beide Karabiner K1 und K2 versperrt (Fig. 1f). Gegen Ende des Versperrvorgangs des Karabiners K1 wird der Karabiner K2 über das Kupplungsmittel 7 entsperrt und es kann der Karabiner K2, wie dies die Fig. 1h zeigt, geöffnet werden und ebenfalls auf das vom Mast 3 weiterführende Stahlseil 2 eingehängt werden (vgl. Fig. li).

Darauffolgend kann sich die sich sichernde Person von der Plattform 1 entlang des Stahlseils 2 weiterbewegen; sie ist durch den nunmehr versperrten Karabiner K1 vollständig gegen Absturz gesichert. Wie sich aus der obigen Beschreibung ergibt, ist es nicht möglich, dass die sich sichernde Person durch Unachtsamkeit oder Fehlmanipulation auch nur einen Augenblick während des Umhängevorganges ungesichert ist. Einer der Karabiner K1 oder K2 ist immer gegen Öffnen gesichert, d.h. gesperrt.

Fig. 2 veranschaulicht eine mechanische Kuppelung der beiden Karabiner K1 und K2 mittels eines Bowdenzuges 7, der in dem Sicherungsband 6 locker eingebaut ist, sodass bei einem Sturz der sich sichernden Person oder bei Auftreten einer sonstwie verursachten Zugbelastung auf das Sicherungsband 6 nur das Sicherungsband 6, nicht jedoch der Bowdenzug 7 belastet wird.

Der Aufbau eines Karabiners K1 bzw. K2 ist aus Fig. 3 und Fig. 4 ersichtlich. Der Schnapper 8 des Karabiners ist über eine Schwenkachse 9 am Karabinerkörper 10 wie üblich gelenkig gelagert, wobei im geschlossenen Zustand ein Einrasten des frei beweglichen Endes des Schnappers 8 am Karabinerkörper 10 möglich ist, beispielsweise durch eine Kerbe 11 am Karabinerkörper 10 und ein in die Kerbe 11 einrastendes Gegenstück 12, beispielsweise ausgebildet als Bolzen 12.

Der Schnapper 8 weist einen sich zum Karabinerkörper 10 erstreckenden Fortsatz 13 auf, der mittels eines Führungsbolzens 14 mit einer Blockiervorrichtung 15 gekuppelt ist, und zwar in eine Nut 16 bzw. in einen Schlitz der Blockiervorrichtung 15 eingreift, entlang welcher Nut 16 (bzw. welchem Schlitz) dieser Führungsbolzen 14 je nach Stellung der Blockiervorrichtung 15 bewegbar ist, wodurch sich je nach Stellung der Blockiervorrichtung 15 der Schnapper 8 öffnen lässt oder gegen Öffnen blockiert ist. Die Nut 16 bzw. der Schlitz weist zwei bogenförmige Äste 16' und 16" auf, die im Winkel zueinander angeordnet sind. Der Karabinerkörper 10 ist mit einem den vom Karabinerkörper 10 umschlossenen Raum teilweise schließenden Gehäuse 17 versehen, das eine Öse 18 für ein Sicherungsband, d.h. das Verbindungsstück 6, das zu der sich sichernden Person führt, aufweist. Die Blockiervorrichtung 15 ist mit einer Achse 20 am Gehäuse 17 schwenkbar befestigt. Weiters weist das Gehäuse 17 ein Schlüsselloch 19 fluchtend zu dem Ast 16' oder der Nut 16 auf.

Die Blockiervomichtung 15 ist weiters mit dem Bowdenzug 7 über eine Befestigungsnoppe 21 verbunden. Der Karabinerkörper 10 weist weiters eine Justiervorrichtung 22, beispielsweise ein Gewinde mit Gegenmutter, auf, um den Bowdenzug 7 auf seine richtige Länge zum Zweck des Zusammenwirkens mit einem zweiten Karabiner gleicher Bauart einstellen zu können. Fig. 3 veranschaulicht noch das im Karabiner verlaufende Stahlseil 2.

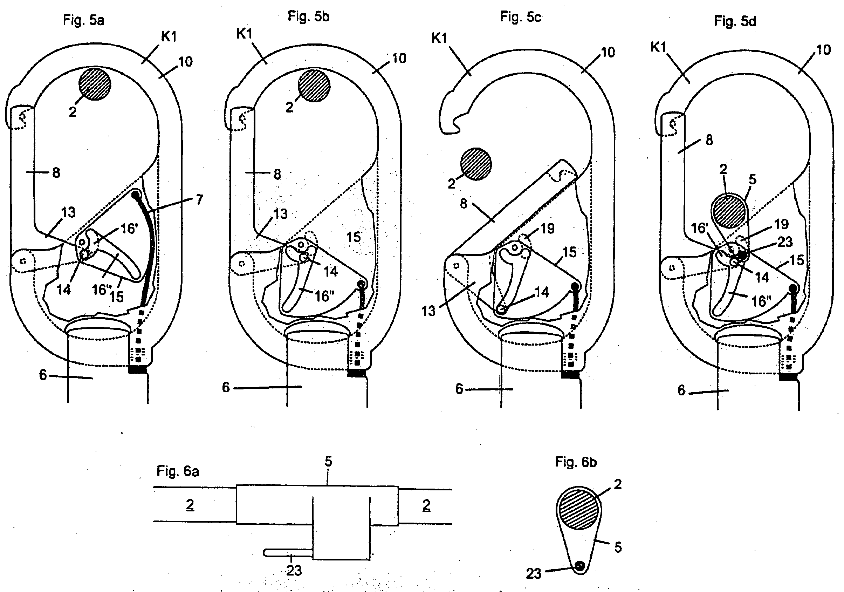

Die Funktion zweier zusammenwirkender Karabiner K1 und K2 ist nachstehend anhand der Fig. 5a bis 5d veranschaulicht.

Gemäß Fig. 5a befindet sich der Karabiner K1 im geschlossenen Zustand und die Blockiervorrichtung 15 verhindert in der in Fig. 5a gezeigten Position ein Öffnen des Schnappers 8, zumal ein Gleiten des Führungsbolzens 14 in den Ast 16" der Nut 16 allein durch Bewegen des Schnappers 8 nicht möglich ist; der Führungsbolzen 14 befindet sich hierbei im Ast 16' der Nut 16. Ein Öffnen dieses Karabiners wäre nur möglich, wenn der zweite zu diesem Selbstsicherungsset gehörende Karabiner K2, der sich zu diesem Zeitpunkt im unverschlossenen Zustand, wie er in Fig. 5b veranschaulicht ist, befindet, verschlossen wird.

Fig. 5b zeigt den Karabiner K1 in unverschlossenem Zustand, wobei sich der Schnapper 8, wie in Fig. 5c dargestellt ist, öffnen lässt, indem der Führungsbolzen 14 entlang des Astes 16" der Nut 16 gleiten kann, sodass der Karabiner K1 aus dem Stahlseil 2 ausgehängt werden kann. Ein Verschließen, d.h. Sperren gegen Öffnen, ist, wie in Fig. 5d gezeigt, nur möglich, wenn der am Stahlseil 2 befestigte Schlüssel 5, der einen Schließbolzen 23 aufweist, der durch das Schlüsselloch 19 hindurchführbar ist, gegenüber dem Karabiner K1 eine Relativbewegung durchführt, gemäß der die Blockiervorrichtung 15 aus der in Fig. 5d gezeigten Position wiederum in die in Fig. 5a gezeigte Position bewegt wird. Dies kann nur nach Einhängen des Karabiners K1 in das den Schlüssel 5 aufweisende Stahlseil 2 durchgeführt werden, da nur dann der Schließbolzen 23 des Schlüssels 5 in das Schlüsselloch 19 und in den Schnittpunkt der Äste 16' und 16" der Nut 16 bzw. des Schlitzes der Blokkiervorrichtung 15 einführbar ist, worauf der Karabiner K1 zum Zweck des Entsperrens des zweiten Karabiners K2 gegenüber dem Schlüssel 5 bewegt werden muss, bisdie Blockiervorrichtung 15 mittels des Schließbolzens 23 wiederum in die in Fig. 5a gezeigte Position geführt wird. Der Bowdenzug 7 überträgt die Bewegung der Blokkiervorrichtung 15 des Karabiners K1 auf die Blockiervorrichtung 15 des anderen Karabiners K2 und bewirkt so eine gegengleiche Bewegung derselben.

Mit Hilfe des Schlüssels 5 lassen sich Klettersteige oder Hochseilgärten insoferne regulieren, als ein solcher Schlüssel 5 nur an einer Seite jedes Abschnittes des Hochseilgartens bzw. Klettersteiges vorgesehen ist. Weiters ist es möglich, verschiedene Schlüssel 5 vorzusehen, sodass mit einem bestimmten Selbstsicherungsset gewisse Abschnitte eines Hochseilgartens nicht begehbar sind, beispielsweise indem der Durchmesser des Schließbolzens 23 des Schlüssels 5 derart bemessen ist, dass er nur in Schlüssellöcher 19 von Karabinern K1 und K2 ganz bestimmter Selbstsicherungssets passt.

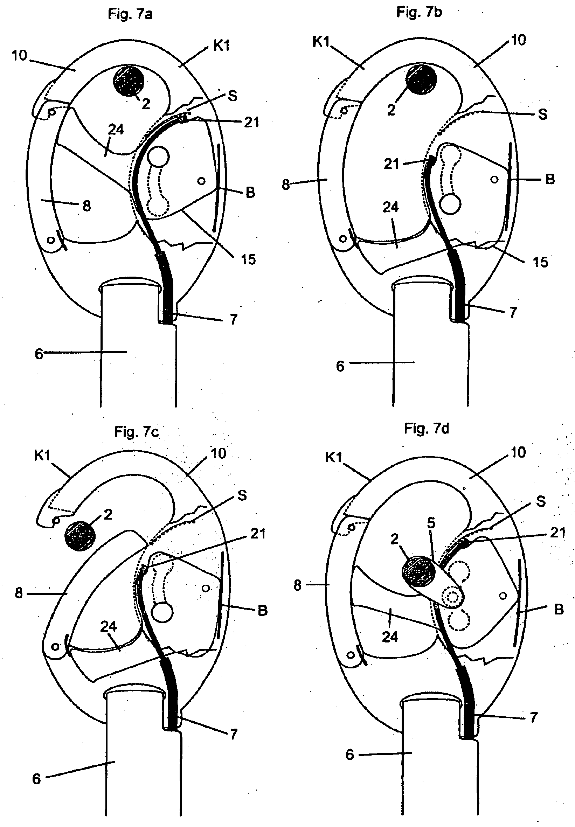

In den Fig. 7a bis 7d ist die Funktion eines Karabiners K1 veranschaulicht, der ebenfalls mittels eines Bowdenzuges 7 mit einem Karabiner K2 gekuppelt ist, wobei jedoch der Karabiner K1 eine Variante einer Blokkiervorrichtung 15 aufweist, die mit einem Sperrfortsatz 24 versehen ist, der aus einer den Schnapper 8 blockierenden Position, wie in Fig. 7a veranschaulicht, in eine den Schnapper 8 zu einer Öffnungsbewegung freigebenden Position, die in Fig. 7b veranschaulicht ist, bewegbar ist, und zwar durch Schwenken der Blockiervorrichtung 15, wobei der Bowdenzug 7 wiederum den mit dem Karabiner K1 gekoppelten Karabiner K2 gegengleich in eine ein Öffnen ermöglichende Stellung bzw. in eine Schließstellung bringt, und zwar durch Bewegen der Blockiervorrichtung 15 des Karabiners K2 gegengleich zur Bewegung der Blockiervorrichtung 15 des Karabiners K1.

Eine Blattfeder B sichert ein Verharren der Blokkiervorrichtung 15 in ihren Endstellungen, die in den Fig. 7a, 7b und 7c dargestellt sind.

Fig. 7d zeigt den Einsatz des Schlüssels 5 nach Einhängen des Karabiners in das Seil, was in Fig. 7c veranschaulicht ist.

Um ein Öffnen eines gesperrten Karabiners mittels des Sperrfortsatzes 24 zu verhindern, ist eine als Zahnband ausgebildete Sperre S vorgesehen, in die die Befestigungsnoppe 21 mit einer Gegenverzahnung eingreift. Nur durch eine Zugbewegung des Bowdenzuges 7 läßt sich die Zahnverbindung lösen.

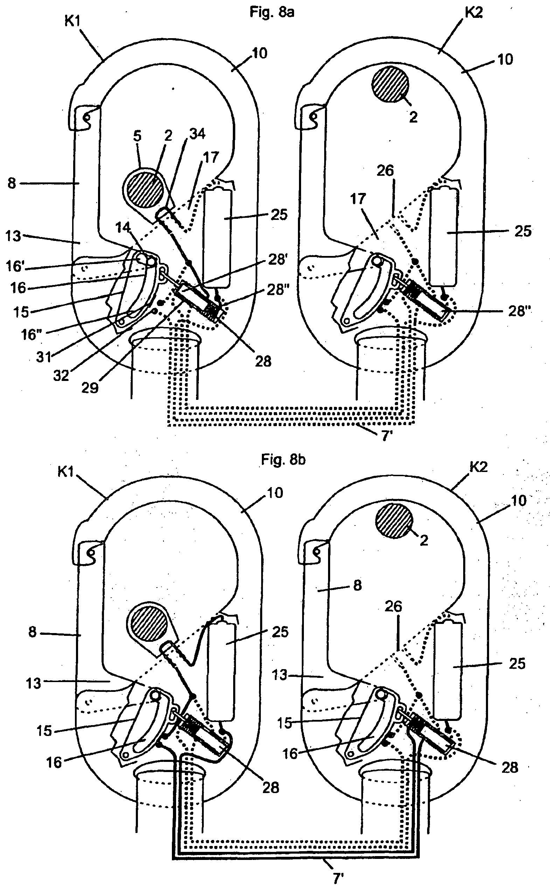

Anstelle der oben beschriebenen mechanischen Kupplungsmittel 7 könnten zur Kommunikation zwischen den Karabinern K1 und K2 auch elektrisch betriebene Kupplungsmittel 7' vorgesehen sein. Solche Varianten erfordern eine Energieversorgung des Selbstsichenungssets. Der Vorteil einer solchen elektrischen Kuppelung der Karabiner K1 und K2 liegt darin, dass die Verbindung zwischen den Karabinern K1 und K2 als flexibles mehrpoliges Kabel 7' verlegbar ist, wodurch das Verbindungsstück 6 leichter handhabbar und unempfindlicher ist. In den Fig. 8a bis 8d sind jeweils zwei Karabiner K1 und K2 eines Selbstsicherungssets veranschaulicht, wobei die elektrische Kuppelung mittels punktierter Linien veranschaulicht ist.

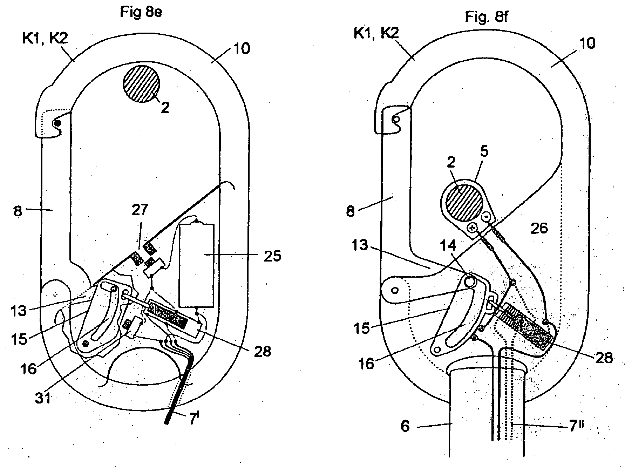

In dem Gehäuse 17 des Karabinerkörpers 10 ist eine Batterie 25 vorgesehen, die über eine Steckdose 26, die im Gehäuse 17 des Karabinerkörpers 10 vorgesehen ist, oder über einen Schalter 27 gemäß einer in Fig. 8e dargestellten Variante, die sonst jedoch mit der Variante nach Fig. 8a identisch ist, mit einer Doppelspule 28 - gebildet von den Spulen 28' und 28" - gekoppelt ist, in der ein Eisenkern 29 axial verschiebbar ist. Dieser Eisenkern 29 ist über eine Schubstange mit der Blockiervorrichtung 15 verbunden, sodass diese Blockiervorrichtung 15 durch Verlagern des Eisenkerns 29 aus einer in Fig. 8a für den Karabiner K1 gezeigten Offenstellung in eine in Fig. 8b für den Karabiner K1 gezeigte Sperrstellung bewegbar ist.

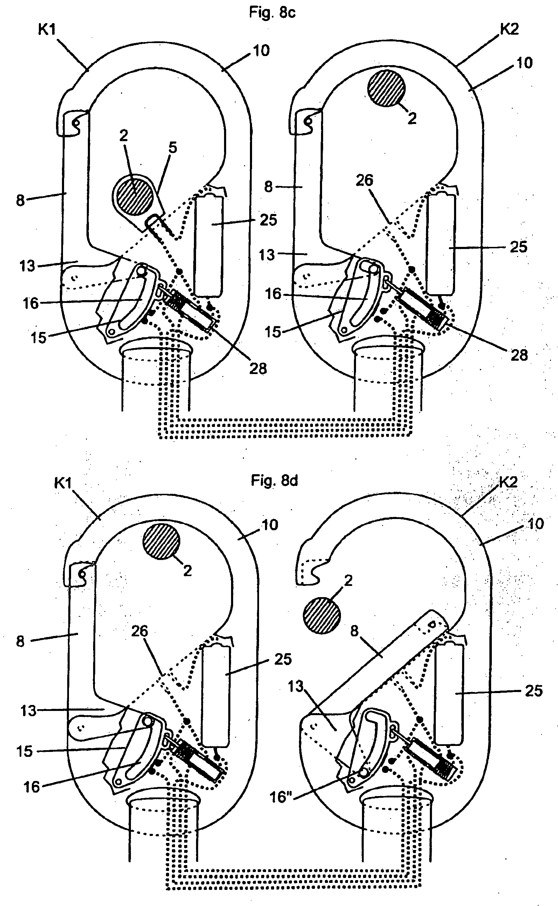

Ein Fortsatz 13 des Schnappers 8 ist ähnlich wie gemäß der in Fig. 3 und Fig. 4 dargestellten Ausführungsform mit einem Führungsbolzen 14 in einer Nut 16 bzw. einem Schlitz der Blockiervorrichtung 15 geführt. An der Blockiervorrichtung 15 ist eine Kontaktstelle 31 zum Schließen eines Schalters 32 vorgesehen. Der Schlüssel 5 ist mit einem Stecker 34 versehen, der die Steckdose 26 kurzschließt, worauf der Kolben 5 in die in Fig. 8b für den Karabiner K1 gezeigte Stellung in die Spule 28" bewegt wird, und zwar unter Mitnahme der Blokkiervorrichtung 15, wodurch dieser Karabiner K1 gegen Öffnen gesperrt ist. Durch Schließen des Schalters 32 mittels der Blockiervorrichtung 15 im Karabiner K1 gelangt Strom zur Spule 28' des Karabiners K2, worauf deren Kolben 29 zur Spule 28' bewegt wird und die Blokkiervorrichtung in die Freigabestellung bewegt, in der sich der Führungsbolzen des Schnappers entlang des Astes 16" der Nut 16 bzw. des Schlitzes zum Öffnen des Karabiners K2 bewegen lässt. Diese Position ist in Fig. 8c für den Karabiner K2 veranschaulicht. Hierbei ist der Schalter 32 des Karabiners K2 geöffnet. Der Karabiner K2 kann, wie in Fig. 8d veranschaulicht, vom Stahlseil 2 genommen werden und in den nächsten Abschnitt des Stahlseils 2 wiederum eingehängt werden.

Fig. 8f zeigt eine Ausführungsform, gemäß der eine Stromversorgung der Karabiner K1 und K2 über den Schlüssel 5 erfolgt, der an eine zentrale Stromversorgungsstelle, z.B. Verkabelung aller Schlüssel in einem Hochseilgarten, oder eine dezentrale Stromversorgungsstelle, z.B. an eine Solaranlage oder eine Batterie bzw. einen Akku, angeschlossen ist. Diese Ausführungsform funktioniert prinzipiell analog zu der in Fig. 8a dargestellten.

Wie eingangs erwähnt, lässt sich das erfindungsgemäße Selbstsicherungsset nicht nur für Klettersteige und Hochseilgärten verwenden, sondern auch für das Begehen ausgesetzter Stellen an Bauwerken, wie Hochhäusern, Masten, Brücken etc., beispielsweise bei Reparatur- und/oder Wartungsarbeiten, sowie bei Schiffen und auch im Weltraum. Nachfolgend sind die Einsatzgebiete für das erfindungsgemäße Selbstsicherungsset näher erläutert:

### Hochseilgärten

Das durchgehend gesicherte Selbstsicherungsset ermöglicht maximale Teilnehmersicherheit auf Hochseilgärten. Dies ermöglicht dem Teilnehmer, sich voll auf die Übungen und weniger auf die eigene Sicherheit zu fokussieren.

Das Problem der Kindersicherung und der Sicherung von unbedarften Teilnehmern wird damit gelöst, wodurch auch die Trainer entlastet werden.

Überholen oder entgegenkommendes Passieren ist an allen Punkten mit Schlüsseln möglich, Abzweigungen sind ohne weiteres möglich, auf jeder Plattform können beliebig viele Seilübungen beginnen oder enden. Weiters bietet das System die Möglichkeit der telematischen Teilnehmersteuerung im Hochseilgarten.

Vorhandene Self-Belay Hochseilgärten können mit wenig Aufwand für die Nutzung des durchgehend gesicherten Selbstsicherungsset umgerüstet werden.

### Klettersteige

Für Klettersteige bietet das durchgehend gesicherte Selbstsicherungsset die Möglichkeit, größere Gruppen, wie etwa Schulklassen, unter relativ wenig Aufsicht, klettern zu lassen. Der Kletterer hängt sich am Anfang des Steiges ein, benutzt den Steig bis zum Ende und kann sich erst wieder dort entsichern.

Überholen oder entgegenkommendes Passieren ist an allen Punkten mit Schlüsseln möglich. Mit dem selbst sichernden Selbstsicherungsset kann ebenso einlang von Stahlseilen gegangen, wie auch Leitern und andere Steigmittel benutzt werden.

Auch ein Ausstieg und neuerlicher Einstieg in das System ist möglich, etwa, wenn ein Klettersteig nicht durchgehend mit Stahlseilen und anderen Hilfsmittel ausgerüstet ist.

Vorhandene Self-Belay Klettersteige können mit wenig Aufwand für die Nutzung des durchgehend gesicherten Selbstsicherungsset umgerüstet werden.

### Gebäudesicherung

Außenarbeiten an Gebäuden, wie etwa die

Wartung von Windkraftwerken, Fensterputzen auf Wolkenkratzern oder auch Renovierungsarbeiten, werden oftmals gerüstfrei ausgeführt.

Die arbeiteten Personen werden daher mit Seilen gesichert. Neben der Haupttätigkeit, also Renovierung oder Reparaturen, müssen die arbeitenden Personen auch Kletter- und Sicherungstechniken beherrschen. Durch die Konzentration auf die eigentliche Tätigkeit kommt es immer wieder zur Vernachlässigung der Sicherheit und in der Folge zu Unfällen.

Das durchgehend gesicherte Selbstsicherungsset macht ein versehentliches Entsichern während der Arbeit unmöglich.

Vorhandene Bauwerke können leicht mit Schlüsseln ausgestattet werden, bei Neubauten kann ohne großen Aufwand das System vorbereitet werden.

### Sicherung von Astronauten und Weltraumtouristen

Das durchgehend sichere Selbstsicherungsset kann nicht nur beim Klettern, sondern auch zur Sicherung in völlig anderen Bereichen, bis hin zur Sicherung von Astronauten außerhalb eines Raumschiffes, verwendet werden.

### Sicherung auf Booten und Schiffen

Auf Booten und Schiffen ist - besonders bei schlechtem Wetter - eine Sicherung der Personen mit Gurt und Karabiner üblich. Das durchgehend sichere Selbstsicherungsset kann hier mehr Sicherheit gewährleisten.

Möglichkeiten der telematischen Steuerung der Benutzung von Hochseilgärten sind nachstehend beschrieben:

### Problematik der Ablauforganisation auf Hochseilgärten

Werden bei Hochseilgärten mehrere Übungen verknüpft angeboten, so gibt es mehrere Arten der Anordnung der verschiedenen Elemente:
- Anordnung in einem Rundkurs
- Sternförmige Anordnung
- Chaotische Anordnung

Sowohl trainer- als auch teilnehmerseitig muss stets darauf geachtet werden, die Kapazitäten (Belastungsgrenzen) der Plattformen und Übungen nicht zu überschreiten. Ein häufiges Problem dabei ist die unterschiedliche Geschwindigkeit der Teilnehmer auf den verschiedenen Übungen oder ein untereinander Überholen (wollen) der Teilnehmer. Weiters kommt es häufig vor, dass Teilnehmer attraktive Übungen mehrmals begehen wollen.

Die Trainer sind daher sowohl sicherheitstechnisch als auch organisatorisch gefordert.

### Selbstständige Steuerung durch das durchgehend gesicherte Selbstsicherungsset

Durch gezielte Anordnung der Schlüssel für das durchgehend gesicherte Selbstsicherungsset lässt sich die Richtung der Teilnehmer beeinflussen. In eine Übung kann immer nur auf jener Seite eingestiegen werden, auf der ein Schlüssel montiert ist.

Durch verschiedene Schlüssel können verschiedene Teilnehmer auf unterschiedlichen Wegen durch den Hochseilgarten geführt werden. So kann beispielsweise gesteuert werden, dass Kinder nur leichte Übungen in geringer Höhe begehen, gute Kletterer mit ihrem Schlüssel Zutritt zu allen Übungen erhalten.

Dasselbe gilt analog für herkömmliche Klettersteige, die auf durchgehende Sicherung durch Montage von Schlüsseln umgerüstet werden.

### Steuerung durch das durchgehend gesicherte Selbstsicherungsset mit gekennzeichneten Schlüsseln, Funkübertragung und Computer

Es besteht die Möglichkeit durch Chips oder optische Abtastung (wie auch bei EAN=Codes) den Schlüsseln 5 Informationsgehalt zu geben. Dadurch weiß der Karabiner K1 und K2, wo er sich befindet.

Stattet man nun die Karabiner mit einem Funksystem aus (z.B. Bluetooth), so können sie damit nicht nur untereinander kommunizieren, sie können die Information auch auf diesem Weg an einen Computer übertragen.

Mithilfe dieses Steuerungssystems lassen sich folgende Möglichkeiten automatisch oder durch Eingreifen eines Trainers in das Computerprogramm realisieren:
- Sperren von Übungen
- Sperren der gesamten Anlage (z.B. im Fall eines Unfalles)
- Verhindern von neuen Einstiegen und lediglich den Weg Richtung Ausgang zulassen (z.B. bei Betriebsschluss)
- Steuerung, wie viele Teilnehmer sich auf einer Übung befinden dürfen
- Steuerung, in welcher Richtung Übungen begangen werden
- Zulassen oder Verbieten von Überholmanövern
- Abrechnung nach Zeit der Benutzung
- Abrechnung nach Anzahl und Art der begangenen Übungen
- Eruierung der Gesamtbenutzungsanzahl von Übungen, um den Zeitpunkt des nächsten Services festzustellen
- Eruierung der Attraktivität der Übungen, um dies bei Änderungen des Hochseilgarten zu berücksichtigen

Die Erfindung beschränkt sich nicht auf die oben beschriebenen Ausführungsformen, sondern sie kann in verschiedener Weise modifiziert werden, z.B. können anstelle der Karabiner sogenannte "FROGS" eingesetzt werden.

Weiters kann der Schlüssel auch noch folgende Formen haben:
- optisch mit Laserabtastung: Der Karabiner erkennt mittels Laserabtastung eines Codes auf einem sicheren Punkt (z.B. Stahlseil), dass er sich an einem sicheren Punkt befindet.
- Computerchip: Der Karabiner erkennt anhand eines smarten oder nicht smarten Chips auf einem sicheren Punkt (z.B. Stahlseil), dass er sich auf einem sicheren Punkt befindet.
- induktiv: Das Stahlseil wird als Eisenkern eines Induktionsvorganges genutzt. Dies hat den Vorteil, dass kein Schlüssel angebracht werden muss und das Stahlseil als Schlüssel verwendet werden kann. Eine Auslösung des Induktionsvorganges durch andere metallische Gegenstände (z.B. Schlüsselbund, Taschenmesser) ist dabei zu verhindern.
- magnetisch: Das Stahlseil dient als Eisenkern und zieht damit eine magnetische Blockiervorrichtung in seine Richtung. Diese Lösung macht die Anbringung eines Schlüssels am Stahlseil überflüssig und eignet sich dadurch auch für unpräparierte Klettersteige oder Hochseilgärten.

## Patentansprüche

1. Anlage mit zwei oder mehreren Sicherungsstellen (2), wobei die Anlage ein Selbstsicherungsset aufweist,
wobei das Selbstsicherungsset aufweist zwei in Sicherungsstellen (2) einhängbaren gegen Öffnen mittels einer Blockiervorrichtung (15, 17) blockierbaren Karabinern (K1 und K2), die an jeweils einem mit einer sich sichernden Person verbindbaren Verbindungsstück (6) befestigt sind, wobei die Blockiervorrichtungen (15, 17) der beiden Karabiner (K1, K2) mittels eines Kupplungsmittels (7, 7') gekoppelt sind, **dadurch gekennzeichnet,**
- **dass** als Teil des Selbstsicherungssets ein Sicherungsmittel (5) für die Karabiner (K1, K2) vorgesehen ist,
wobei das Selbstsicherungsset derart eingerichtet ist, dass das Sicherungsmittel (5) bei Einhängen eines Karabiners (K1, K2) in die Sicherungsstelle (2) und bei Betätigen des Sicherungsmittels (5) diesen mittels seiner Blockiervorrichtung (15, 17) gegen Öffnen versperrt, wobei über das Kupplungsmittel (7, 7') die Blockiervorrichtung (17, 25) des zweiten Karabiners (K2, K1) derart betätigt wird, dass der zweite Karabiner (K2, K1) zum Öffnen freigegeben ist, sodass stets nur einer der Karabiner (K1, K2) geöffnet werden kann,
wobei das Sicherungsmittel als:
ein an einer der Sicherungsstellen (2) befestigter Schlüssel (5); oder
elektronische Sicherungsmittel, wie Computerchips; oder
magnetisch oder induktiv wirkende Sicherungsmittel; oder
optisch wirkende Sicherungsmittel
vorgesehen ist.

2. Anlage nach Anspruch 1, wobei das Selbstsicherungsset **dadurch gekennzeichnet ist, dass** das Kupplungsmittel (7, 7') mechanisch wirkend ausgebildet ist.

3. Anlage nach Anspruch 1, wobei das Selbstsicherungsset **dadurch gekennzeichnet ist, dass** das Kupplungsmittel (7, 7') elektrisch wirkend ist.

4. Anlage nach Anspruch 1, wobei das Selbstsicherungsset **dadurch gekennzeichnet ist, dass** das Kupplungsmittel (7, 7') über Funk wirkend ist.

5. Anlage nach Anspruch 1, wobei das Selbstsicherungsset **dadurch gekennzeichnet ist, dass** das Kupplungsmittel (7, 7') hydraulisch wirkend ist.

6. Anlage nach einem der Ansprüche 1 bis 5, **dadurch gekennzeichnet, dass** die Sicherungsstellen (2) von an Fixpunkten befestigten Seilen (2), Bügeln, Leitern oder Handläufen ausgebildet sind.

7. Anlage nach einem der Ansprüche 1 bis 6, **dadurch gekennzeichnet, dass** benachbarte Sicherungsstellen (2) in Reichweite voneinander angeordnet sind.

## Claims

1. A system with two or more belay points (2), wherein the system comprises a self-belay set, wherein the self-belay set comprises two carabiners (K1 and K2) hungable at belay points (2), which are blockable against opening by means of a blocking apparatus (15, 17), wherein each of the carabiners is attached to a connection piece (6) which is connectable to a self-belaying person, wherein the blocking apparatuses (15, 17) of both carabiners (K1, K2) are coupled by a coupling means (7,7'),
**characterized in that**
a locking means (5) for the carabiners (K1, K2) is provided as a part of the self-belay set, wherein the self-belay set is configured such that the locking means (5) blocks, upon mounting one carabiner (K1, K2) at the belay point (2) and upon actuating the locking means (5), the carabiner against opening by means of its blocking apparatus (15, 17), wherein the blocking apparatus (17, 25) of the second carabiner (K2, K1) is actuated via the coupling means (7, 7') in such a way that the second carabiner (K2, K1) is released for opening, so that at all times only one of the carabiners (K1, K2) is openable,
wherein the locking means is provided as:
a key (5) fastened to one of the belay points (2); or
electronic locking means, such as computer chips; or
magnetic or inductive acting locking means; or
optical acting locking means.

2. The system according to claim 1, wherein the self-belay set is **characterized in that** the coupling means (7, 7') is designed as mechanically acting.

3. The system according to claim 1, wherein the self-belay set is **characterized in that** the coupling means (7, 7') is acting electrically.

4. The system according to claim 1, wherein the self-belay set is **characterized in that** the coupling means (7, 7') is acting via radio.

5. The system according to claim 1, wherein the self-belay set is **characterized in that** the coupling means (7, 7') is acting hydraulically.

6. The system according to one of the claims 1 to 5, **characterized in that** the belay points (2) are formed by ropes (2), brackets, ladders or hand-rails fastened to fixed points.

7. The system according to one of the claims 1 to 6, **characterized in that** adjacent belay points (2) are arranged within range from one another.

## Revendications

1. Installation comportant deux ou plusieurs emplacements de sécurité (2), sachant que l'installation présente un kit autobloquant, sachant que le kit autobloquant comportant deux mousquetons (K1 et K2) pouvant être bloqués pour empêcher toute ouverture au moyen d'un dispositif de blocage (15, 17) et pouvant être suspendus à des emplacements de sécurité (2), lesquels mousquetons sont fixés au niveau respectivement d'une pièce de liaison (6) pouvant être reliée à une personne à sécuriser, sachant que les dispositifs de blocage (15, 17) des deux mousquetons (K1, K2) sont couplés au moyen d'un moyen d'accouplement (7, 7'), **caractérisé en ce**
- **qu'**est prévu comme partie du kit autobloquant un moyen de sécurité (5) pour les mousquetons (K1, K2), sachant que le kit autobloquant est configuré de telle manière que le moyen de sécurité (5) bloque au moyen d'un dispositif de blocage (15, 17), un mousqueton empêchant toute ouverture lorsque ledit mousqueton (K1, K2) est suspendu à l'emplacement de sécurité (2) et lorsque le moyen de sécurité (5) est actionné, sachant que le dispositif de blocage (17, 25) du deuxième mousqueton (K2, K1) est actionné par l'intermédiaire du moyen d'accouplement (7, 7') de telle manière que le deuxième mousqueton (K2, K1) est débloqué aux fins de l'ouverture de sorte que systématiquement uniquement un des mousquetons (K1, K2) peut être ouvert,
sachant que le moyen de sécurité est prévu :
comme une clé (5) fixée au niveau de l'un de les emplacements de sécurité (2); ou
comme des moyens de sécurité électroniques tels que des puces informatiques ; ou
comme des moyens de sécurité à action magnétique ou inductive ; ou
comme des moyens de sécurité à action optique.

2. Installation selon la revendication 1, sachant que le kit autobloquant est **caractérisé en ce que** le moyen d'accouplement (7, 7') est réalisé de manière à avoir une action mécanique.

3. Installation selon la revendication 1, sachant que le kit autobloquant est **caractérisé en ce que** le moyen d'accouplement (7, 7') a une action électrique.

4. Installation selon la revendication 1, sachant que le kit autobloquant est **caractérisé en ce que** le moyen d'accouplement (7, 7') a une action s'effectuant par réception radio.

5. Installation selon la revendication 1, sachant que le kit autobloquant est **caractérisé en ce que** le moyen d'accouplement (7, 7') a une action hydraulique.

6. Installation selon l'une quelconque des revendications 1 à 5, **caractérisée en ce que** les emplacements de sécurité (2) sont réalisés sous la forme de cordes (2) fixées à des points fixes, d'étriers, d'échelles ou de mains courantes.

7. Instillation selon l'une quelconque des revendications 1 à 6, **caractérisée en ce que** des emplacements de sécurité (2) adjacents sont disposés à portée les uns des autres.
